# EUROPÄISCHE PATENTSCHRIFT

(11) **EP 0 298 270 B1**
(45) Veröffentlichungstag und Bekanntmachung des Hinweises auf die Patenterteilung: **17.08.1994**
(21) Anmeldenummer: 88109257.1
(22) Anmeldetag: 10.06.1988
(51) Int. Cl.: B25G 3/14, B25G 3/18

(54) **Arbeitsgerät, wie Gartengerät, Feldgerät, Putzgerät oder dergleichen**
Tool such as gardening tool, farming tool, cleaning tool or the like
Outil tel qu'un outil de jardinage, d'agriculture, de nettoyage ou similaire

(30) Priorität: 04.07.1987 DE 3722219
(43) Veröffentlichungstag der Anmeldung: 11.01.1989
(73) Patentinhaber: Max Langenstein Feld- und Gartengeräte GmbH & Co., D-89257 Illertissen (DE)
(72) Erfinder: Langenstein Max, D-7918 Illertissen (DE)
(74) Vertreter: Fay, Hermann, Dipl.-Phys. Dr.

(56) Entgegenhaltungen:
- EP-A- 0 033 072
- EP-A- 0 070 725
- CH-A- 204 206
- DE-A- 2 402 521
- DE-A- 3 506 239
- DE-B- 1 026 280
- DE-C- 64 530
- DE-C- 130 113
- DE-U- 8 318 026
- FR-A- 792 601
- GB-A- 1 450 007
- GB-A- 1 580 007
- US-A- 2 450 044

## Beschreibung

Die Erfindung betrifft ein Arbeitsgerät, wie Gartengerät, Feldgerät, putzgerät oder dergl., mit einem in einer Befestigungshülse des Arbeitsgerätes sitzenden Gerätestiel und mit einer Spanneinrichtung mit einem Spannstück, das im geschlossenen Zustand der Spanneinrichtung durch eine Öffnung in der Wand der Befestigungshülse hindurch in den Gerätestiel eingreift, wobei das Spannstück an einem Spannhebel angeordnet ist, der außerhalb der umfangsmäßig geschlossenen Befestigungshülse um eine zur Hülsenachse etwa senkrecht verlaufende Achse schwenkbar gelagert und von der Schwenkachse aus gesehen wesentlich länger als das Spannstück ist, das mit dem Spannhebel eine Art von Winkelhebel bildet, und wobei eine den Spannhebel in der dem geschlossenen Zustand der Spanneinrichtung entsprechenden Schwenklage festhaltende Verriegelungseinrichtung vorgesehen ist, die ein in Bezug auf den Spannhebel verstellbares Riegelglied aufweist, wobei bei geschlossener Spanneinrichtung das Ende des Gerätestiels durch das Spannstück axial gegen einen von der Befestigungshülse gebildeten Anschlag verspannt ist.

Bei derartigen aus GB-A-1 580 007 bekannten Arbeitsgeräten befindet sich der Spannhebel am Gerätestiel. Im geschlossenen Zustand der Spanneinrichtung ist der Spannhebel vom Gerätestiel weggeschwenkt, im offenen Zustand gegen den Gerätestiel hingeschwenkt. Das Spannstück ist an der dem Arbeitsgerät abgewandten Seite mit einer Abschrägung versehen, die beim Schwenken des Spannhebels in den geschlossenen Zustand der Spanneinrichtung am Rand der Aussparung in der Befestigungshülse entlang gleitet und so den Gerätestiel gegen die Befestigungshülse axial verspannt. In einer Gewindebohrung am Spannhebel sitzt eine Schraube, die mit ihrem Ende am Gerätestiel abgestützt ist. Durch Verdrehen der Schraube im richtigen Drehsinn drückt sie das Ende des Spannhebels vom Gerätestil weg und erzeugt so den festen Sitz des Spannstücks in der Aussparung der Befestigungshülse. In diesem Zustand kommt der Schraube auch eine Verriegelungsfunktion zu, denn zum Wechseln des Arbeitsgerätes muß die Schraube zunächst wieder gelöst werden, damit die Abstützung am Gerätestiel aufgehoben wird und der Spannhebel in die zum Gerätestiel hin geschwenkte Lage verstellt werden kann.

Die der Erfindung zugrundeliegende Aufgabe besteht darin, ein Arbeitsgerät der eingangs genannten Art so auszubilden, daß einerseits ein fester Spannsitz des Gerätestils erreicht werden kann, andererseits eine einfache und sichere Befestigung des Spannhebels in seiner verriegelten Stellung gewährleistet wird.

Diese Aufgabe wird nach der Erfindung dadurch gelöst, daß der an der Befestigungshülse gelagerte Spannhebel im geschlossenen Zustand der Spanneinrichtung gegen den Geratestiel hin-, im geöffneten Zustand aber soweit von ihm weggeschwenkt ist, daß das Spannstück außer Eingriff am Gerätestiel steht, daß ferner das um eine zur Schwenkachse des Spannhebels parallele Achse schwenkbar gelagerte Riegelglied in Verstellrichtung unter der Kraft einer Verriegelungsfeder in eine am Spannhebel vorgesehene Riegelaufnahme greift, wenn sich der Spannhebel in der dem Schließzustand der Spanneinrichtung entsprechenden Schwenklage befindet, sowie von Hand gegen die Kraft der Verriegelungsfeder aus der Riegelaufnahme heraus schwenkbar ist, und daß die Riegelaufnahme so ausgebildet ist, daß der Spannhebel nur dann in seine der Offenstellung der Spanneinrichtung entsprechende Schwenklage verstellbar ist, wenn zuvor das Riegelglied gegen die Kraft der Verriegelungsfeder aus der Riegelaufnahme heraus bewegt worden ist.

Vorteilhaft bei der Erfindung ist, daß sich der Spannhebel und die Verriegelungseinrichtung an der Befestigungshülse befinden und also das Arbeitsgerät mit jedem geeigneten Gerätestiel passenden Durchmessers verwendet werden kann. Weiterhin gewährleistet das in die am Spannhebel vorgesehene Riegelaufnahme greifende Riegelglied einerseits die zuverlässige Halterung des Spannhebels in der Verriegelungsstellung, andererseits ist es mit einem einfachen Handgriff gegen die Kraft der Verriegelungsfeder aus der Riegelaufnahme heraus verschwenkbar, die Verriegelungseinrichtung also schnell und in einfacher Weise lösbar.

In diesem Zusammenhang kann es sich empfehlen, daß am Spannhebel neben der Riegelaufnahme eine Rastaufnahme für das Riegelglied vorgesehen ist, in die das Riegelglied unter der Kraft der Verriegelungsfeder greift, wenn sich der Spannhebel in der dem offenen Zustand der Spanneinrichtung entsprechenden Schwenklage befindet, und daß die Rastaufnahme im Gegensatz zur Riegelaufnahme bezüglich ihrer Randflanken so ausgebildet ist, daß der Spannhebel aus seiner der Offenstellung der Spanneinrichtung entsprechenden Schwenklage bewegbar ist, ohne daß zuvor das Riegelglied aus seinem Eingriff in der Rastaufnahme gelöst werden muß.

Zweckmäßigerweise ist das Riegelglied an Lagerlaschen bzw. an einem die Lagerlaschen bildenden Trägerteil gelagert. Um günstige mechanische Belastungsverhältnisse für das Riegelglied zu schaffen, weist dieses zwei den Spannhebel an der Riegel- und der Rastaufnahme beidseits übergreifende Wangen auf, mit welchen das Riegelglied in seiner Schwenkachse gelagert ist und zwischen welchen sich ein den Riegelkopf des Riegelgliedes bildender Querstift erstreckt. - Im übrigen besteht die Möglichkeit, daß eine die Lagerlaschen mit dem sie bildenden Trägerteil abdeckende, der Befestigungshülse aufsitzende Haube vorgesehen ist, die Fenster für den Durchtritt des Spannhebels und des Riegelgliedes aufweist.

Im folgenden wird die Erfindung an einem in der Zeichnung dargestellten Ausführungsbeispiel näher erläutert, es zeigen:
- Fig. 1: eine Seitenansicht der Stielbefestigung eines Arbeitsgerätes nach der Erfindung,
- Fig. 2: einen Längsschnitt durch den Gegenstand der Fig. 1,

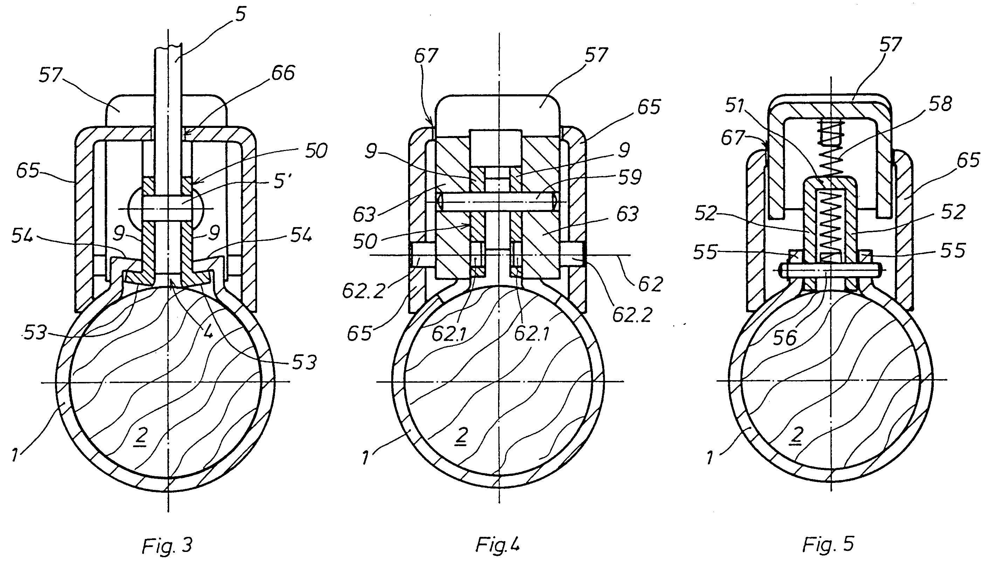

- Fig. 3.: den Querschnitt XIV-XIV in Fig. 2,
- Fig. 4: den Querschnitt XV-XV in Fig. 2,
- Fig. 5: den Querschnitt XVI-XVI in Fig. 2.

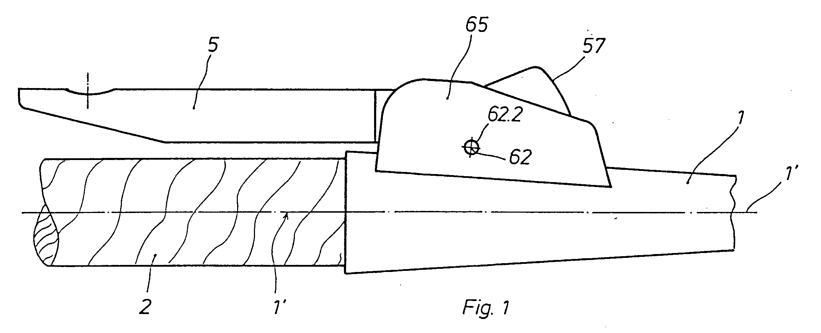

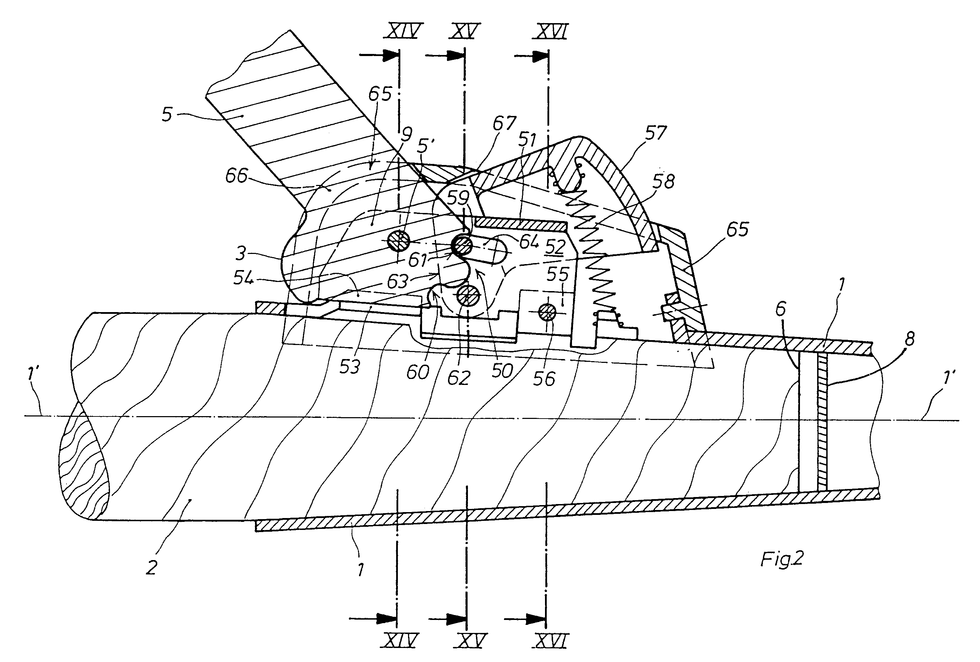

In der Zeichnung ist das Arbeitsgerät jeweils nur zum Teil mit einem in einer Befestigungshülse 1 sitzenden Gerätestiel 2 dargestellt. Am vorderen Ende der Befestigungshülse 1 befindet sich das eigentliche, nicht gezeigte Arbeitsteil, beispielsweise ein Schaufelblatt, eine Hacke, ein Wischer oder dergl. Außen auf der Befestigungshülse 1 ist eine Spanneinrichtung angeordnet, die ein Spannstück 3 aufweist, das im geschlossenen Zustand der Spanneinrichtung durch eine Öffnung 4 in der Wand der Befestigungshülse 1 hindurch in den Gerätestiel 2 eingreift. Das Spannstück 3 ist an einem Spannhebel 5 angeordnet, der außen an der Befestigungshülse 1 um eine zur Hülsenachse 1' etwa senkrecht verlaufende Achse 5' schwenkbar gelagert und von dieser Schwenkachse 5' aus gesehen wesentlich länger als das Spannstück 3 ist. Der Spannhebel 5 und das Spannstück 3 bilden zusammen einen Winkelhebel von in ihrer Länge sehr unterschiedlichen Hebelarmen. Im geschlossenen Zustand der Spanneinrichtung ist der Spannhebel 5 gegen den Gerätestiel 2 hingeschwenkt, wie dies in Fig. 1 dargestellt ist. Im geöffneten Zustand der Spanneinrichtung aber ist der Spannhebel 5 so weit vom Gerätestiel 2 entsprechend der Darstellung in Fig. 2 weggeschwenkt, daß das Spannstück 3 außer Eingriff am Gerätestiel 2 steht, so daß der Gerätestiel 2 aus der Befestigungshülse 1 herausgezogen, bzw. in sie eingesteckt werden kann. Wird die Spanneinrichtung geschlossen, verspannt das in den Gerätestiel 2 dann eindringende Spannstück 3 den Gerätestiel 2 axial gegen einen von der Befestigungshülse 1 gebildeten Anschlag, der bei sich konisch verjüngender Befestigungshülse 1, wie sie in der Zeichnung dargestellt ist, durch die Anlage des Gerätestiels 2 an der Innenseite der sich konisch verjüngenden Hülsenwand zustande kommt. Besitzt dagegen die Befestigungshülse 1 zylindrische Gestalt, so besteht die Möglichkeit, in der Befestigungshülse 1 einen in der Zeichnung nur angedeuteten Anschlag 8 anzuordnen, gegen den das Ende 6 des Gerätestiels 2 stößt, so daß bei geschlossener Spanneinrichtung der Gerätestiel 2 zwischen dem Anschlag 8 einerseits und dem Spannstück 3 andererseits axial verspannt ist.

Die Befestigungshülse 1 trägt zwei parallel mit Abstand voneinander angeordnete und im wesentlichen radial von der Befestigungshülse 1 abstehende Lagerlaschen 9. Zwischen diesen beiden Lagerlaschen 9 ist der Spannhebel 5 mit dem Spannstück 3 gelagert, und außerdem ist zwischen diesen Lagerlaschen 9 die Öffnung 4 in der Wand der Befestigungshülse 1 vorgesehen. Eine Verriegelungseinrichtung hält den Spannhebel 5 in der zum Gerätestiel 2 hingeschwenkten, dem Schließzustand der Spanneinrichtung entsprechenden Schwenklage fest. Die beiden Lagerlaschen 9 befinden sich an einem allgemein mit 50 bezeichneten Trägerteil, das, - gesehen in Axialrichtung der Befestigungshülse 1, - im wesentlichen die Form eines U-förmigen Bügels besitzt, dessen durch einen Bügelrücken 51 verbundene Bügelschenkel 52 axial zu den Lagerlaschen 9 verlängert sind. Das Trägerteil 50 ist mit den beiden Lagerlaschen 9 von außen auf die Befestigungshülse 1 aufgesetzt, wobei die beiden Lagerlaschen 9 mit auswärts gerichteten Pratzen 53 unter beidseits der Öffnung 4 für das Spannstück 3 vorgesehene Flansche 54 greifen, die in die Wand der Befestigungshülse 1 eingeformt sind. Das Trägerteil 50 ist gegen Axialverschiebungen auf der Befestigungshülse 1 gesichert, wozu die Bügelschenkel 52 an der Befestigungshülse 1 ausgebildete Laschen 55 übergreifen und daran mit einem Stift 56 gesichert sind. Die Verriegelungseinrichtung besitzt ein in Bezug auf den Spannhebel 5 verstellbares Riegelglied 57, das in Verstellrichtung unter der Kraft einer Verriegelungsfeder 58 mit einem Riegelkopf 59 in eine am Spannhebel 5 vorgesehene Riegelaufnahme 60 greift, wenn sich der Spannhebel 5 in der dem Schließzustand der Spanneinrichtung entsprechenden Schwenklage (Fig. 1) befindet. Außerdem ist am Spannhebel 5 neben der Riegelaufnahme 60 eine Rastaufnahme 61 für den Riegelkopf 59 vorgesehen, in die der Riegelkopf 59 unter der Kraft der Verriegelungsfeder 58 eingreift, wenn sich der Spannhebel 5, wie in Fig. 2 dargestellt, in der dem offenen Zustand der Spanneinrichtung entsprechenden Schwenklage befindet. Die Riegelaufnahme 60 und die Rastaufnahme 61 sind bezüglich ihrer Randflanken so ausgebildet, daß bei in die Riegelaufnahme 60 eingreifenden Riegelkopf 59 der Spannhebel 5 nur dann in seine der Offenstellung der Spanneinrichtung entsprechende Schwenklage verstellt werden kann, wenn zuvor das Riegelglied 57 gegen die Kraft der Verriegelungsfeder 58 aus der Riegelaufnahme 60 heraus bewegt wird. Die Rastaufnahme 61 dagegen ist so geformt, daß der Spannhebel 5 aus seiner der Offenstellung der Spanneinrichtung entsprechenden Schwenklage in die der Schließstellung der Spanneinrichtung entsprechende Schwenklage bewegt werden kann, ohne daß zuvor das Riegelglied 57 aus seinem Eingriff in der Rastaufnahme 61 gelöst werden müßte. Beim Bewegen des Spannhebels 5 in die Schließstellung wird der Riegelkopf 59 über die Flanke der Rastaufnahme 61 aus dem Rastsitz herausgedrückt.

Das Riegelglied 57 ist um eine zur Schwenkachse 5' des Spannhebels 5 parallele Achse 62 schwenkbar gelagert und von Hand gegen die Kraft der Verriegelungsfeder 58 mit seinem Riegelkopf 59 aus der Riegelaufnahme 60 heraus verschwenkbar. Das Riegelglied 57 ist in seiner Achse 62 an den bzw. dem die Lagerlaschen 9 bildenden Trägerteil 50 gelagert. Im einzelnen besitzt dazu das Riegelglied 57 zwei den Spannhebel 5 an der Riegel- und der Rastaufnahme 60, 61 beidseits übergreifende Wangen 63, mit welchen das Riegelglied 57 in seiner Schwenkachse 62 gelagert ist und zwischen welchen sich ein den Riegelkopf 59 bildender Querstift erstreckt, der das Trägerteil 50 in einem Langloch 64 durchsetzt. Wie insbesondere die Fig. 4 erkennen läßt, besitzen die Wangen 63 in der Achse 62 beidseits koaxial angeordnete Zapfen. Die jeweils inneren Zapfen 62.1 lagern das Riegelglied 57 am Trägerteil 50. Die äußeren Zapfen 62.2 dienen dazu, an der Befestigungshülse 1 eine Haube 65 zu halten, welche die Lagerlaschen 9 mit dem sie bildenden Trägerteil 50 abdeckt. Die Haube 65 sitzt der Befestigungshülse 1 auf und ist mit Fenstern 66, 67 für den Durchtritt des Spannhebels 5 bzw. des Riegelgliedes 57 versehen.

## Patentansprüche

1. Arbeitsgerät, wie Gartengerät, Feldgerät, Putzgerät oder dergl., mit einem in einer Befestigungshülse (1) des Arbeitsgerätes sitzenden Gerätestiel (2) und mit einer Spanneinrichtung mit einem Spannstück (3), das im geschlossenen Zustand der Spanneinrichtung durch eine Öffnung (4) in der Wand der Befestigungshülse (1) hindurch in den Gerätestiel (2) eingreift, wobei das Spannstück (3) an einem Spannhebel (5) angeordnet ist, der außerhalb der umfangsmäßig geschlossenen Befestigungshülse (1) um eine zur Hülsenachse (1') etwa senkrecht verlaufende Achse (5') schwenkbar gelagert und von der Schwenkachse (5') aus gesehen wesentlich länger als das Spannstück (3) ist, das mit dem Spannhebel eine Art von Winkelhebel bildet, und wobei eine den Spannhebel (5) in der dem geschlossenen Zustand der Spanneinrichtung entsprechenden Schwenklage festhaltende Verriegelungseinrichtung vorgesehen ist, die ein in Bezug auf den Spannhebel (5) verstellbares Riegelglied (57) aufweist, wobei bei geschlossener Spanneinrichtung das Ende (6) des Gerätestiels (2) durch das Spannstück (3) axial gegen einen von der Befestigungshülse (1) gebildeten Anschlag (8) verspannt ist, dadurch gekennzeichnet, daß der an der Befestigungshülse (1) gelagerte Spannhebel (5) im geschlossenen Zustand der Spanneinrichtung gegen den Gerätestiel (2) hin-, im geöffneten Zustand aber soweit von ihm weggeschwenkt ist, daß das Spannstück (3) außer Eingriff am Gerätestiel steht, daß ferner das um eine zur Schwenkachse (5') des Spannhebels (5) parallele Achse (62) schwenkbar gelagerte Riegelglied (57) in Verstellrichtung unter der Kraft einer Verriegelungsfeder (58) in eine am Spannhebel (5) vorgesehene Riegelaufnahme (60) greift, wenn sich der Spannhebel (5) in der dem Schließzustand der Spanneinrichtung entsprechenden Schwenklage befindet, sowie von Hand gegen die Kraft der Verriegelungsfeder (58) aus der Riegelaufnahme (60) heraus schwenkbar ist, und daß die Riegelaufnahme (60) so ausgebildet ist, daß der Spannhebel (5) nur dann in seine der Offenstellung der Spanneinrichtung entsprechende Schwenklage verstellbar ist, wenn zuvor das Riegelglied (57) gegen die Kraft der Verriegelungsfeder (58) aus der Riegelaufnahme (60) heraus bewegt worden ist.

2. Arbeitsgerät nach Anspruch 1, dadurch gekennzeichnet, daß am Spannhebel (5) neben der Riegelaufnahme (60) eine Rastaufnahme (61) für das Riegelglied (57) vorgesehen ist, in die das Riegelglied (57) unter der Kraft der Verriegelungsfeder (58) greift, wenn sich der Spannhebel (5) in der dem offenen Zustand der Spanneinrichtung entsprechenden Schwenklage befindet, und daß die Rastaufnahme (61) im Gegensatz zur Riegelaufnahme (60) bezüglich ihrer Randflanken so ausgebildet ist, daß der Spannhebel (5) aus seiner der Offenstellung der Spanneinrichtung entsprechenden Schwenklage bewegbar ist, ohne daß zuvor das Riegelglied (57) aus seinem Eingriff in der Rastaufnahme (61) gelöst werden muß.

3. Arbeitsgerät nach einem der Ansprüche 1 bis 2, dadurch gekennzeichnet, daß das Riegelglied (57) an Lagerlaschen (9) bzw. einem die Lagerlaschen (9) bildenden Trägerteil (50) gelagert ist.

4. Arbeitsgerät nach einem der Ansprüche 1 bis 3, dadurch gekennzeichnet, daß das Riegelglied (57) zwei den Spannhebel (5) an der Riegel- und der Rastaufnahme (60, 61) beidseits übergreifende Wangen (63) aufweist, mit welchen das Riegelglied (57) in seiner Schwenkachse (62) gelagert ist und zwischen welchen sich ein den Riegelkopf (59) des Riegelgliedes (57) bildender Querstift erstreckt.

5. Arbeitsgerät nach einem der Ansprüche 1 bis 4, dadurch gekennzeichnet, daß eine die Lagerlaschen (9) mit dem sie bildenden Trägerteil (50) abdeckende, der Befestigungshülse (1) aufsitzende Haube (65) vorgesehen ist, die Fenster (66, 67) für den Durchtritt des Spannhebels (5) und des Riegelgliedes (57) aufweist.

## Claims

1. A working implement such as a garden implement, field implement, cleaning implement or the like, having an implement stick (2) which fits in a fixing sleeve (1) of the working implement, and a clamping means with a clamping portion (3) which in the closed condition of the clamping means engages into the implement stick (2) through an opening (4) in the wall of the fixing sleeve, wherein the clamping portion (3) is arranged on a clamping lever (5) which is mounted outside the peripherally closed fixing sleeve (1) pivotably about an axis (5') extending substantially perpendicularly to the sleeve axis (1') and which as viewed from the pivot axis (5') is substantially longer than the clamping portion (3) which with the clamping lever forms a kind of angle lever, and wherein there is provided a locking means which retains the clamping lever (5) in the pivotal position corresponding to the closed condition of the clamping means and which has a lock member (57) which is displaceable in relation to the clamping lever (5), wherein when the clamping means is closed the end (6) of the implement stick (2) is braced by the clamping portion (3) axially against an abutment (8) formed by the fixing sleeve (1), characterised in that in the closed condition of the clamping means the clamping lever (5) which is mounted on the fixing sleeve (1) is pivoted towards the implement stick (2) but in the opened condition it is pivoted away from same to such an extent that the clamping portion (3) is out of engagement with the implement stick, that in addition the lock member (57) which is mounted pivotably about an axis (62) that is parallel to the pivot axis (5') of the clamping lever engages in the direction of displacement under the force of a locking spring (58) into a locking receiving means (60) provided on the clamping lever (5) when the clamping lever (5) is in the pivotal position corresponding to the closed condition of the clamping means, and can be pivoted out of the locking receiving means (60) by hand against the force of the locking spring (58), and that the locking receiving means (60) is of such a configuration that the clamping lever (5) can be displaced into its pivotal position corresponding to the open condition of the clamping means only when the lock member (57) has been first moved out of the locking receiving means (60) against the force of the locking spring (58).

2. A working implement according to claim 1 characterised in that provided on the clamping lever (5) beside the locking receiving means (60) is a retaining receiving means (61) for the lock member (57), into which the lock member (57) engages under the force of the locking spring (58) when the clamping lever (5) is in the pivotal position corresponding to the open condition of the clamping means, and that in contrast to the locking receiving means (60) the retaining receiving means (61) is of such a configuration in respect of its edge flanks that the clamping lever (5) is movable out of its pivotal position corresponding to the open position of the clamping means without the lock member (57) first having to be released from its engagement in the retaining receiving means (61).

3. A working implement according to one of claims 1 and 2 characterised in that the lock member (57) is mounted on mounting plates (9) or a carrier member (50) forming the mounting plates (9).

4. A working implement according to one of claims 1 to 3 characterised in that the lock member (57) has two side portions (63) which engage over the clamping lever (5) at the locking and retaining receiving means (60, 61) on both sides and with which the lock member (57) is mounted at its pivot axis (62) and between which extends a transverse pin forming the locking head (59) of the lock member (57).

5. A working implement according to one of claims 1 to 4 characterised in that there is provided a cap (65) which fits on the fixing sleeve (1) and which covers the mounting plates (9) with the carrier member (50) forming same and which has openings (66, 67) for the clamping lever (5) and the lock member (57) to pass therethrough.

## Revendications

1. Outil, tel qu'un outil de jardinage, d'agriculture, de nettoyage ou similaire, avec un manche d'outil (2) placé dans un manchon de fixage (1) de l'outil et avec un dispositif de serrage à tendeur (3), qui engrène par une ouverture (4), lorsque le dispositif de serrage est fermé, dans la paroi du manchon de fixage (1) dans le manche de l'outil (2), le tendeur (3) étant disposé sur un levier de tension (5), qui est logé, de façon pivotante, hors du manchon de fixage (1) fermé de façon périphérique, autour d'un axe (5') passant presque à l'oblique d'un axe de manchon (1') et est, vu depuis l'axe de pivotement, notablement plus long que le tendeur (3), qui constitue avec le levier de tension une sorte de levier coudé, un dispositif de verrouillage étant prévu qui retient le levier de tension (5) dans la position de pivotement, correspondant à la position fermée du dispositif de serrage, qui présente un élément de verrouillage (57) ajustable par rapport au levier de tension (5), l'extrémité (6) du manche de l'outil (2) étant, lors de la fermeture du dispositif de serrage, tendue par le tendeur (3) de façon axiale contre un butoir (8) formé par le manchon de fixage (1), caractérisé en ce que le levier de tension (5) logé sur le manchon de fixage (1) est, lorsque le dispositif de serrage est fermé, pivoté vers le manche de l'outil (2) pour venir se placer contre lui, et, en position ouverte, pivoté si loin de lui, que le tendeur (3) se trouve hors d'atteinte au manche de l'outil, que, de plus, l'élément de verrouillage (57) logé de façon pivotante autour d'un axe (62) parallèle à l'axe de pivotement (5') du levier de tension (5), s'agrippe en sens de réglage, sous la force d'un ressort de verrouillage (58), dans un logement de verrou (60) prévu sur le levier de tension (5), lorsque le levier de tension (5) se trouve dans la position de pivotement correspondant à l'état de fermeture du dispositif de serrage, du moment que le ressort de verrouillage (58) est orientable à la main contre la force du ressort de verrouillage (58) hors du logement du verrou (60), et caractérisé en ce que le logement du verrou (60) est conçu de telle façon que le levier de tension (5) est seulement ajustable ensuite dans sa position de pivotement correspondant à la position ouverte du dispositif de serrage, quand, auparavant, l'élément de verrouillage (57) a été déplacé vers l'extérieur hors du logement du verrou (60)contre la force du ressort de verrouillage (58).

2. Outil selon la revendication 1, caractérisé en ce qu'un logement d'encoche (61) pour l'élément de verrouillage (57) est prévu sur le levier de tension (5) près du logement du verrou (60), dans lequel. l'élément de verrouillage (57) s'agrippe sous la force du ressort de verrouillage (58), lorsque le levier de tension (5) se trouve dans la position de pivotement correspondant à la position ouverte du dispositif de serrage, et en ce que le logement d'encoche (61) est ainsi conçu, contrairement au logement du verrou (60) relativement à ses flancs extrêmes, en ce que le levier de tension (5) est amovible à partir de sa position de pivotement correspondant à la position ouverte du dispositif de serrage, sans qu'auparavant l'élément de verrouillage (57) soit dégagé de son engrènement dans le logement d'encoche (61).

3. Outil selon l'une des revendications 1 à 2, caractérisé en ce que l'élément de verrouillage (57) est logé aux éclisses de soutien (9) ou à une pièce porteuse (50) constituant les éclisses de soutien.

4. Outil de travail selon l'une des revendications 1 à 3, caractérisé en ce que l'élément de verrouillage (57) présente deux faces (63) recouvrant des deux côtés le levier de tension (5) au logement du verrou et de l'encoche, avec lesquelles l'élément de verrouillage (57) est logé dans son axe de pivotement (62) et entre lesquelles s'applique une cheville transversale constituant la tête de verrouillage (59) de l'élément de verrouillage (57).

5. Outil de travail selon l'une des revendications 1 à 4 caractérisé en ce qu'une calotte (65) est prévue couvrant les éclisses de soutien (9) avec la pièce porteuse (50) les constituant, et s'accrochant sur le manchon de fixage (1), qui présente des ouvertures (66, 67) pour le passage du levier de tension (5) et de l'élément de verrouillage (57).
